# EUROPÄISCHE PATENTSCHRIFT

(11) **EP 4 374 336 B1**
(45) Veröffentlichungstag und Bekanntmachung des Hinweises auf die Patenterteilung: **08.07.2026**
(21) Anmeldenummer: 22738360.1
(22) Anmeldetag: 21.06.2022
(51) Int. Cl.: G06V 20/52, G06V 20/64

(54) **VERFAHREN ZUR ÜBERWACHUNG EINES LADERAUMES**
METHOD FOR MONITORING A LOADING SPACE
PROCÉDÉ DE SURVEILLANCE D'UN ESPACE DE CHARGEMENT

(30) Priorität: 21.07.2021 DE 102021118878
(43) Veröffentlichungstag der Anmeldung: 29.05.2024
(73) Patentinhaber: ZF CV Systems Global GmbH, 3006 Bern (CH)
(72) Erfinder: FEYERABEND, Konrad, 30625 Hannover (DE); KÜHNE, Sebastian, 31157 Sarstedt (DE); ZYMERI, Gafur, 30952 Ronnenberg (DE)
(74) Vertreter: ZF Friedrichshafen AG
(86) Internationale Anmeldenummer: PCT/EP2022/066859
(87) Internationale Veröffentlichungsnummer: WO 2023/001465

(56) Entgegenhaltungen:
- EP-A2- 1 883 050
- DE-A1- 10 133 511
- DE-A1- 102020 126 615

## Beschreibung

Die Erfindung betrifft ein Verfahren zur Überwachung eines Laderaums, bei dem mindestens eine den Laderaum begrenzende Fläche mit einem oder mehreren im Inneren des Laderaumes vorgesehenen abstandsmessenden Sensoren dreidimensional vermessen wird, wobei als Messwerte die aktuellen Abstände von Messpunkten oder Messpunktmengen von dem Sensor oder von den Sensoren in Form von 3D-Daten erfasst werden und die Messwerte mittels eines in einer Rechen- oder Auswerteeinheit programmierten Algorithmus verarbeitet und mit vorgegebenen Schwellenwerten oder Mustern für ein erwartetes Auftreten der Messwerte verglichen und klassifiziert werden und wobei bei einer vorgegebenen Abweichung zwischen aktuellen und erwarteten Messwerten bzw. 3D-Daten ein weiter verarbeitbares Signal bereitgestellt wird.

Wenn hier und im Folgenden von "dem Sensor" oder dem "mindestens einen Sensor" die Rede ist, so kann es sich bei diesem Sensor um einen einzelnen Sensor, aber auch um einen, mehrere oder alle der mehreren Sensoren handeln.

Der Begriff "erwartete Messwerte" bezieht sich hier auf diejenigen Messwerte, die charakteristisch für vorhandene und aufgrund der Geometrie des Laderaums bekannte Grenzflächen des Laderaums sind. So erzeugen etwa bei einem ebenfalls bekannten und vorgegebenen Einbau- oder Befestigungsort des Sensors innerhalb des Laderaums die Grenzflächen des Laderaums, also Boden, Wände oder Dach, Messwerte oder Muster für Messwerte, die diesen üblichen Grenzflächen eines Laderaumes eindeutig zuzuordnen sind und so also bei allen neuen Vermessungen des Laderaumes den Erwartungsbereich für die dann ermittelten (neuen) Messwerte bestimmen.

Ein besonderer Schwerpunkt bei der Laderaumüberwachung liegt auf der Kontrolle der Türbereiche, insbesondere dabei auf der Erfassung des Zustandes der Türen des Laderaums. Die Überprüfung, ob die Türen geschlossen sind oder nicht, ist wichtig für zum Beispiel Kühltransporte oder den Transport von empfindlichen Gütern oder auch von Tieren etc. und nicht zuletzt auch für das Verhindern von Diebstählen oder unberechtigtem Zugang zum Ladegut.

Herkömmliche Überwachungssysteme für Türen, auch von Laderäumen, sind als fest installierte Systeme bekannt, wie etwa magnetische Schaltkontakte an der Tür, die lediglich einen binären Zustand überprüfen können, nämlich feststellen können, ob die Tür geschlossen oder offen ist. Ein bestimmter Öffnungswinkel einer Tür oder auch der zeitliche Verlauf einer Öffnung kann mit diesen Systemen nicht detektiert werden. Solche Schaltkontakte sind außerdem und in aller Regel fest im Schließmechanismus oder im Schloss eingebaut und sind somit fest mit dem entsprechenden Fahrzeug oder Container verbunden.

Darüber hinaus ist bei solchen Überwachungssystemen jede Tür bzw. jeder Türflügel mit entsprechenden Kontakten versehen, die somit in einer entsprechenden Vielzahl verbaut werden müssen.

Im Stand der Technik sind auch Systeme bekannt, die mithilfe einer Sensorik und zugehörigen Rechen- und Auswerteeinheiten einen Ladungsstatus und auch den Zustand von Laderaumtüren erkennen können.

Die US 7,940,955 B2 offenbart hierzu ein monokulares Weitwinkel-Bildüberprüfungssystem, welches ein digitales Bild in einer Datenverarbeitungseinrichtung (digital-signal-processor) mit Hilfe eines Algorithmus (resident software routine) nach einer Krümmungskorrektur einer Grenzwert- oder Grenzflächenanalyse unterzieht, um unter anderem den Zustand einer Tür in Bezug auf die Zustände "offen" oder "geschlossen" zu erkennen.

Die dazu durch eine Kamera erzeugten Bilder sind jedoch flächige Darstellungen eines an sich dreidimensionalen Raumes und werden u.a. durch eine Helligkeitsanalyse der einzelnen Farb-Pixel beurteilt. Ein solcher Ausgangspunkt in Form flächiger Bilder ist jedoch für weitergehende Analysen und für etwaige Aussagen in Bezug auf räumliche, d. h. dreidimensionale Eigenschaften des betrachteten Raumes nicht geeignet.

Die Aufgabe der vorliegenden Erfindung bestand demnach in der Bereitstellung einer verbesserten Laderaumüberwachung, die den tatsächlich vorliegenden räumlichen Verhältnissen durch eine dreidimensionale Betrachtungsweise gerecht wird, die insbesondere den Status der zum Laderaum gehörigen Türen erkennen kann und darüber hinaus eine Grundlage für weitere Analysen und Statusbestimmungen aufgrund von dreidimensionalen Daten liefern kann.

Gelöst wird diese Aufgabe durch die Merkmale des Hauptanspruchs. Weitere vorteilhafte Ausbildungen sind in den Unteransprüchen offenbart.

Dabei erfasst mindestens ein im Laderaum vorgesehener abstandsmessender Sensor im Bereich oder in der Richtung von Messpunkten oder Messpunktmengen, welche die erwarteten Abstände einer den Laderaum begrenzenden dreidimensionalen Türoberfläche zum Sensor darstellen, die jeweils aktuellen Abstände von Messpunkten als Messwerte in Form von 3D-Daten.

Als abstandsmessender Sensor ist ein sogenannter tiefenempfindlicher Sensor (depth-aware sensor) vorgesehen, mit dessen Hilfe eine dreidimensionale Vermessung von Messpunkten, also eine Vermessung nach Abstand und Grenzwert- oder Grenzflächenanalyse unterzieht, um unter anderem den Zustand einer Tür in Bezug auf die Zustände "offen" oder "geschlossen" zu erkennen.

Die dazu durch eine Kamera erzeugten Bilder sind jedoch flächige Darstellungen eines an sich dreidimensionalen Raumes und werden u.a. durch eine Helligkeitsanalyse der einzelnen Farb-Pixel beurteilt. Ein solcher Ausgangspunkt in Form flächiger Bilder ist jedoch für weitergehende Analysen und für etwaige Aussagen in Bezug auf räumliche, d. h. dreidimensionale Eigenschaften des betrachteten Raumes nicht geeignet.

Aus der DE102020126615A1 ist ein 3D-Tiefenbildgebungssystem und -verfahren für die automatische Containertürzustandserkennung bekannt. Durch Auswertung der gemessenen 3D-Punktewolke wird bestimmt, ob die Tür teilweise oder vollständig geöffnet ist.

Aus der DE10133511A1 ist ein Verfahren und eine Vorrichtung zur optischen Erkennung des Öffnungszustands einer Fahrzeugtür bekannt. Dabei werden von einer Kamera Bilder der Tür aufgenommen. Die Kamera ist vorzugsweise am Dachhimmel angebracht. Die Bilder der Tür werden ausgewertet und auf Basis des Differenzbildes zwischen dem geschlossenen Zustand und dem geöffneten Zustand wird der Öffnungszustand der Tür gewonnen.

Die Aufgabe der vorliegenden Erfindung bestand demnach in der Bereitstellung einer verbesserten Laderaumüberwachung, die den tatsächlich vorliegenden räumlichen Verhältnissen durch eine dreidimensionale Betrachtungsweise gerecht wird, die insbesondere den Status der zum Laderaum gehörigen Türen erkennen kann und darüber hinaus eine Grundlage für weitere Analysen und Statusbestimmungen aufgrund von dreidimensionalen Daten liefern kann.

Gelöst wird diese Aufgabe durch die Merkmale des Hauptanspruchs. Weitere vorteilhafte Ausbildungen sind in den Unteransprüchen offenbart.

Dabei erfasst mindestens ein im Laderaum vorgesehener abstandsmessender Sensor im Bereich oder in der Richtung von Messpunkten oder Messpunktmengen, welche die erwarteten Abstände einer den Laderaum begrenzenden dreidimensionalen Türoberfläche zum Sensor darstellen, die jeweils aktuellen Abstände von Messpunkten als Messwerte in Form von 3D-Daten.

Als abstandsmessender Sensor ist ein sogenannter tiefenempfindlicher Sensor (depth-aware sensor) vorgesehen, mit dessen Hilfe eine dreidimensionale Vermessung von Messpunkten, also eine Vermessung nach Abstand und Richtung vom Sensor möglich ist, beispielsweise mit entsprechenden Raumkoordinaten und einem Abstandsdatum (3D-Daten).

Der in der Rechen- oder Auswerteeinheit programmierte Algorithmus ist so ausgebildet ist, dass in dem Fall, dass die erfassten Abstände Messpunkte oder Messpunktmengen darstellen, die dreidimensionale Oberflächen außerhalb des Laderaumes beschreiben, auf den Zustand "Tür geöffnet" erkannt wird und ein entsprechendes weiter verarbeitbares erstes Signal bereitgestellt wird.

In dem dazu alternativen Fall, in welchem die erfassten Abstände Messpunkte oder Messpunktmengen darstellen, die keine dreidimensionalen Oberflächen außerhalb des Laderaumes beschreiben, wird vom Algorithmus auf den Zustand "Tür geschlossen" erkannt und ein entsprechendes weiter verarbeitbares zweites Signal bereitgestellt.

Das erfindungsgemäße Verfahren arbeitet also mit einem oder mehreren tiefenempfindlichen, abstandsmessenden Sensoren, die innerhalb eines Laderaums so eingebaut sind, dass der gesamte Laderaum oder mindestens die zu beobachtenden Bereiche des Laderaums im Messbereich des Sensors liegen. Solche Sensoren können zur Detektion der Beladung innerhalb des Laderaums dienen und sind damit auch immer so angebracht, dass die Oberflächenbereiche des Laderaums, in denen Türen angeordnet sind, ebenfalls im Messbereich liegen. So können die die Türbereiche betreffenden Messwerte als Tiefeninformation genutzt werden, um den Status der Türen genauer zu bestimmen. Die Messwerte liegen natürlich dabei in Form von digitalen 3D-Daten vor, die auch zur Bildung von geeigneten Datenmengen, sogenannten DatenClustern, für besonderes zu betrachtende Messpunktmengen zusammengefasst werden können, beispielsweise zu Datenclustern für den Türbereich/die Türen.

Das erfindungsgemäße Verfahren nutzt dabei das Vorhandensein oder das Nichtvorhandensein einer mittels 3D-Datencluster beschriebenen Messpunktemenge einer Oberfläche außerhalb des Laderaums. Vereinfacht gesagt, "schaut" der Sensor in Richtung der Laderaumtür und stellt fest, ob sich dahinter, also außerhalb des Laderaums, eine Oberflächenstruktur durch 3D-Daten ermitteln lässt.

Eine vorteilhafte Weiterbildung besteht darin, dass der Algorithmus so ausgebildet ist, dass in dem Fall, dass die erfassten Abstände Messpunkte oder Messpunktmengen darstellen, die dreidimensionale Oberflächen außerhalb des Laderaumes beschreiben, dann auf den Zustand "Tür geöffnet" erkannt wird, wenn Messpunkte oder Messpunktmengen, welche die erwarteten Abstände einer den Laderaum begrenzenden dreidimensionalen Türoberfläche zum Sensor darstellen, nicht ermittelbar sind und dass in dem alternativen Fall, dass die erfassten Abstände Messpunkte oder Messpunktmengen darstellen, die keine dreidimensionale Oberflächen außerhalb des Laderaumes beschreiben, dann auf den Zustand "Tür geschlossen" erkannt wird, wenn Messpunkte oder eine Messpunktmenge, welche die erwarteten Abstände einer den Laderaum begrenzende dreidimensionalen Türoberfläche zum Sensor darstellen, mindestens teilweise ermittelbar sind.

Dabei wird also zusätzlich untersucht, ob im Erwartungsbereich eine weitere Messpunktmenge oder weitere Messpunkte auftauchen, nämlich solche, die eine etwa tatsächlich vorhandene Türoberfläche beschreiben. Abhängig von dem Vorhandensein oder Nichtvorhandensein der entsprechenden 3D-Daten wird dann das Vorhandensein oder Nichtvorhandensein einer außerhalb des Laderaums liegenden dreidimensionalen Oberfläche noch einmal verifiziert bzw. einer Plausibilitätskontrolle unterzogen. Dadurch erreicht man eine sehr hohe Sicherheit in der eigentlichen Aussage über den Türzustand.

Eine weitere vorteilhafte Ausbildung besteht darin, dass der Algorithmus so ausgebildet ist, dass Messpunkte oder einer Messpunktmengen, welche die erwarteten Abstände einer den Laderaum begrenzende dreidimensionalen Türoberfläche zum Sensor darstellen, in Relation zueinander bewertet werden, wobei bei einem vorbestimmten Versatz und Abstand der Messpunkte zueinander und zum erwarteten Abstand auf eine winklige Stellung der begrenzenden dreidimensionalen Türoberfläche erkannt wird und ein Öffnungswinkel der Tür als weiter verarbeitbares drittes Signal bereitgestellt wird. Das Erkennen einer nur angewinkelten Tür eines Laderaumes ist beispielsweise wichtig während der Beund Entladung von gekühlten Gütern aus einem gekühlten Laderaum. Eine zu lange oder zu große angewinkelte Öffnung und damit ein Energieverlust können dann vermieden werden.

Eine weitere vorteilhafte Ausbildung bei Überwachung eines zu einem Fahrzeug gehörigen Laderaums besteht darin, dass in dem Fall, dass die erfassten Abstände Messpunkte oder Messpunktmengen darstellen, die dreidimensionale Oberflächen außerhalb des Laderaumes beschreiben, die sich auf im Wesentlichen gleicher Höhe mit dem Laderaumboden befinden, auf den Zustand "Tür geöffnet" und "Fahrzeug mit Laderaum an Laderampe" erkannt wird und ein entsprechendes weiter verarbeitbares viertes Signal bereitgestellt wird. Es ist einleuchtend, dass das Erkennen einer Laderampen-Position in Verbindung mit einer geöffneten Tür wichtig ist für die Zustandserkennung während des Ladevorgangs und beispielsweise dazu verwendet werden kann, dass ein Anfahren eines Fahrzeugs aus dieser Position so lange verhindert wird, bis alle Türen geschlossen sind.

Ähnliches gilt für eine weitere vorteilhafte Ausbildung, die darin besteht, dass in dem Fall, dass die erfassten Abstände Messpunkte oder Messpunktmengen darstellen, die dreidimensionale Oberflächen außerhalb des Laderaumes beschreiben, die sich im Wesentlichen unterhalb der Höhe des Laderaumbodens befinden, auf den Zustand "Tür geöffnet" und "Fahrzeug mit Laderaum nicht an Laderampe" erkannt wird und ein entsprechendes weiter verarbeitbares fünftes Signal bereitgestellt wird. Bei einer entsprechend schnellen Verarbeitung des Sensorsignal ist es hier sogar möglich, beim Anfahren an eine rückwärtige Laderampe einen Warn- oder Kollisionshinweis zu geben.

Eine weitere vorteilhafte Ausbildung besteht darin, dass der Sensor nur in Teilbereichen der erwarteten Abstände einer den Laderaum begrenzenden dreidimensionalen Türoberfläche die aktuellen Abstände von Messpunkten als Messwerte erfasst und in dem Fall, dass die erfassten Abstände Messpunkte oder Messpunktmengen darstellen, die dreidimensionale Oberflächen außerhalb des Laderaumes beschreiben, auf den Zustand "Tür bereichsweise geöffnet" erkannt wird und ein entsprechendes weiter verarbeitbares sechstes Signal bereitgestellt wird. Damit können Öffnungen erkannt werden, bei denen nur Teile einer Tür geöffnet sind, etwa der linke, der rechte, der obere oder untere Teil einer Tür. Bei LKW, deren Türen teilweise durch eine verfahrbare Laderampe gebildet werden, ließe sich z.B. erkennen, ob eine Laderampe noch geschlossen, der obere Teil der Tür aber bereits geöffnet ist oder umgekehrt.

Eine weitere vorteilhafte Ausbildung besteht darin, dass der Sensor als optischer Tiefen-Sensor ausgebildet ist, vorzugsweise als Time-of-Flight Kamera (TOF-Kamera) oder Stereokamera. Eine TOF-Kamera liefert beispielsweise für jeden Bildpunkt die Entfernung des darauf abgebildeten Objektes. Dabei kann eine ganze Szene auf einmal aufgenommen werden, ohne dass einzeln abgetastet werden muss, was natürlich zu einer schnelleren Verarbeitung der entsprechenden Signale führt. Natürlich ist es je nach Anwendung ebenfalls vorteilhaft, wenn der Sensor als LiDARSensor oder Laser-Scanner ausgebildet ist, der für eine gerasterte Abtastung eine preiswertere Alternative darstellt.

Eine weitere vorteilhafte Ausbildung besteht darin, dass der zeitliche Änderungsverlauf der die Abstände von Messpunkten oder Messpunktmengen kennzeichnenden Messwerten ausgewertet wird. Bei entsprechend schneller Verarbeitung der Signale kann damit eine zeitliche Historie bzw. ein Verlauf von Ereignissen besonders gut nachvollzogen werden.

Eine Einrichtung zur Überwachung eines Laderaums zur Durchführung des erfindungsgemäßen Verfahrens ist vorteilhafter Weise so ausgebildet, dass die Einrichtung mindestens einen abstandsmessenden Sensor zur dreidimensionalen Vermessung mindestens einer einen Laderaum begrenzende Fläche aufweist, sowie eine Rechen- oder Auswerteeinheit mit einem programmierten Algorithmus, mit dem die vom Sensor erfassten Messwerte nach dem erfindungsgemäßen Verfahren verarbeitet werden, wobei der Sensor an einer den Laderaum begrenzenden und eine Tür aufweisenden Laderaumwand angeordnet ist, also an derjenigen den Laderaum begrenzenden Fläche, die auch die Türoberfläche beinhaltet. Eine solche Sensorposition lässt außerhalb des Laderaums liegende und zu ermittelnde Flächen besonders gut erkennbar werden. Eine zusätzliche Ermittlung der 3D-Daten, die Messpunkte oder Messpunktmengen der Türoberfläche darstellen, ist dann besonders gut mit einer weiteren vorteilhaften Ausbildung zu erreichen, bei der der Sensor gegenüber einer den Laderaum begrenzenden und eine Tür aufweisenden Laderaumwand angeordnet ist, also an derjenigen den Laderaum begrenzenden Fläche, die der Türoberfläche gegenüber liegt.

Natürlich können auch mehrere Sensoren an der einen wie der anderen der genannten Laderaumwände angeordnet sein. Eine entsprechend vergleichende Beurteilung und Verarbeitung der Ergebnisse mehrerer an unterschiedlichen Stellen im Laderaum angeordneten Sensoren führt dann auch zu noch genaueren Aussagen.

Das erfindungsgemäße Verfahren und die dazu besonders geeignete Einrichtung ist in besonderer Weise für ein Fahrzeug mit einem Laderaum geeignet, beispielsweise für einen Lastkraftwagen, ein Anhängefahrzeug oder einen Wagenzug. Ebenfalls ist auch die Anwendung bei Containern sehr gut möglich, die in anderen Fahrzeugen transportiert werden. Dabei weisen das jeweilige Fahrzeug bzw. der Container einen Laderaum auf, in dem mindestens ein abstandsmessender Sensor zur dreidimensionalen Vermessung mindestens einer den Laderaum begrenzende Fläche vorgesehen ist, wobei das Fahrzeug oder der Container bzw. das den Container aufnehmende Fahrzeug weiterhin eine Rechenoder Auswerteeinheit mit einem programmierten Algorithmus aufweist, mit dem die vom Sensor erfassten Messwerte nach dem erfindungsgemäßen Verfahren verarbeitet werden.

Anhand eines Ausführungsbeispiels soll die Erfindung näher erläutert werden. Es zeigen
- Fig. 1: skizzenhaft einige wesentliche Umrisse eines Laderaums,
- Fig. 2: eine Monitor-Darstellung entsprechend aufgearbeiteter und nach dem erfindungsgemäßen Verfahren ausgewerteter 3D-Daten für den Fall "Tür geschlossen"
- Fig. 3: eine Monitor-Darstellung entsprechend aufgearbeiteter und nach dem erfindungsgemäßen Verfahren ausgewerteter 3D-Daten für den Fall "Tür geöffnet" und "Fahrzeug mit Laderaum an Rampe",
- Fig. 3A: skizzenhaft und rein qualitativ das Prinzip der Entstehung des Monitorbildes gemäß Fig. 3,
- Fig. 4: eine Monitor-Darstellung entsprechend aufgearbeiteter und nach dem erfindungsgemäßen Verfahren ausgewerteter 3D-Daten für den Fall "Tür geöffnet" und "Fahrzeug mit Laderaum nicht an Rampe",
- Fig. 4a: skizzenhaft und rein qualitativ das Prinzip der Entstehung des Monitorbildes gemäß Fig. 4,
- Fig. 5: eine Monitor-Darstellung entsprechend aufgearbeiteter und nach dem erfindungsgemäßen Verfahren ausgewerteter 3D-Daten für den Fall "linke Tür geöffnet" und "Fahrzeug mit Laderaum nicht an Rampe",
- Fig. 6: eine Monitor-Darstellung entsprechend aufgearbeiteter und nach dem erfindungsgemäßen Verfahren ausgewerteter 3D-Daten für den Fall "rechte Tür geöffnet" und "Fahrzeug mit Laderaum nicht an Rampe",
- Fig. 7: beispielhaft unterschiedliche Positionen von Sensoren innerhalb eines nur skizzenhaft dargestellten Laderaums.

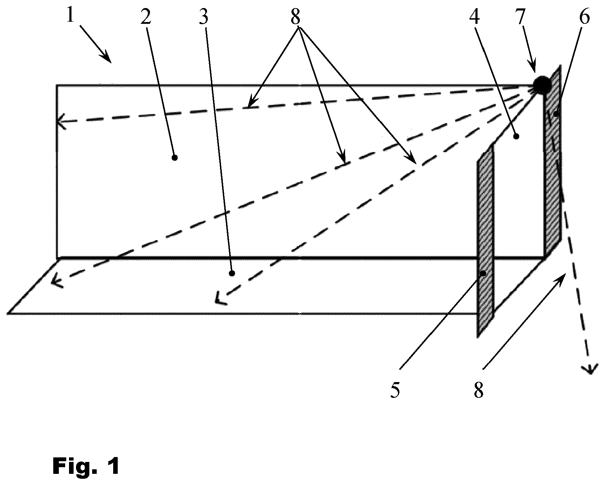

Fig. 1 zeigt lediglich skizzenhaft einige wesentliche Umrisse eines Laderaums 1 mit einer rechten Begrenzungswand 2, einem Laderaumboden 3 und einer Rückwand 4, welche hier mit geöffneten Türen 5, 6 dargestellt ist.

Ein abstandsmessender Sensor 7, hier ein TOF-Sensor, befindet sich in der hinteren oberen Ecke des Laderaums 1, welche durch die rechte Begrenzungswand 2 und die Rückwand 4 gebildet wird. Die gestrichelten Linien 8 stellen beispielhaft einige Richtungen dar, in denen der Sensor 7 dreidimensionale Messungen durchführen kann.

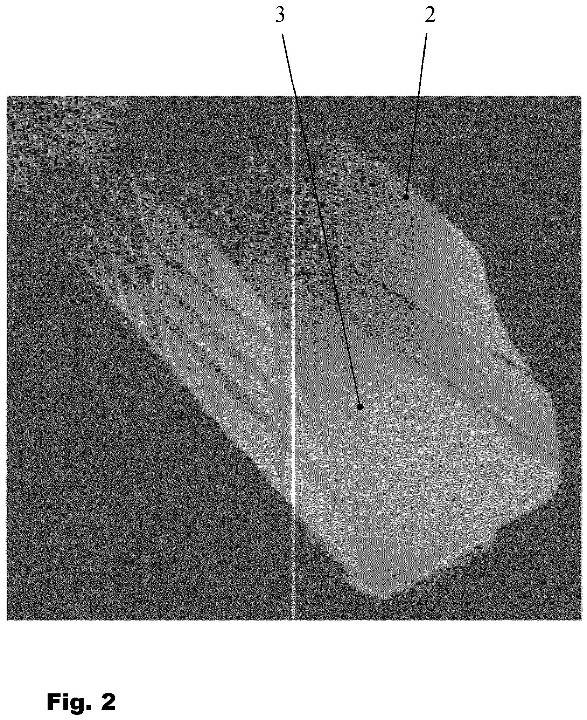

Fig. 2 bis 6 zeigen Monitor-Darstellungen, bei der das mithilfe des erfindungsgemäßen Verfahrens erzeugte Signal bzw. dessen 3D-Daten für eine visuelle Darstellung des Laderaums verarbeitet worden sind. Eine entsprechende rechnerische Aufarbeitung der 3D-Daten liefert dann die hier gezeigten Bilder.

Fig. 2 zeigt ein Ergebnis der Anwendung des erfindungsgemäßen Verfahrens, wobei der Sensor 7 im Bereich von Messpunkten oder Messpunktmengen, welche die erwarteten Abstände einer den Laderaum 1 begrenzenden dreidimensionalen Türoberfläche 7 darstellen, aktuelle Abstände von Messpunkten als Messwerte und somit als 3D-Daten erfasst hat. Der dem erfindungsgemäßen Verfahren zugrunde liegende Algorithmus hat mit diesen Daten den Fall identifiziert, dass die erfassten 3D-Daten keine dreidimensionalen Oberflächen außerhalb des Laderaumes 1 beschreiben bzw. darstellen, wonach auf den Zustand "Tür geschlossen" erkannt wird. Aufgrund der hier gewählten Aufarbeitung der 3D-Daten zu einem Videosignal sind die 3D-Daten der Türen 5, 6 als solche nicht dargestellt, ebenfalls ist der Sensor 7 hier nicht erkennbar.

Die Auswertung der durch die dreidimensionale Vermessung mittels des Sensors 7 führt bei der Verarbeitung durch den Algorithmus also in diesem Fall zu dem Ergebnis, dass die Türen geschlossen sind.

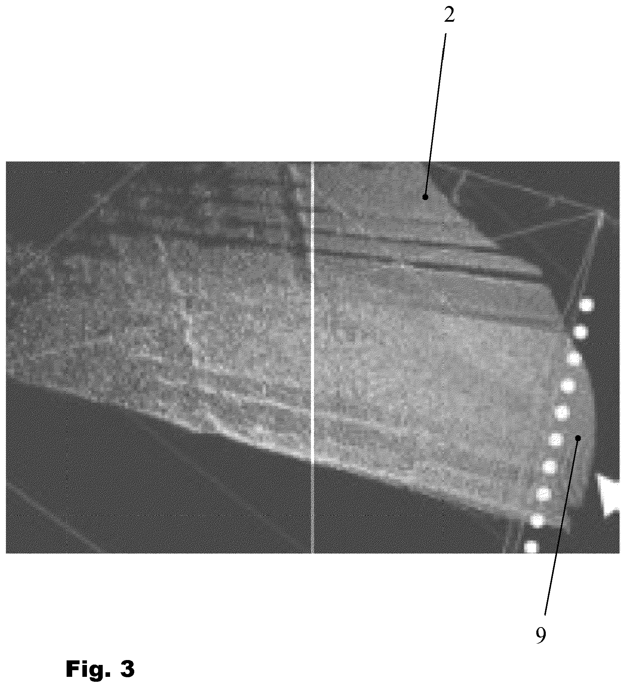

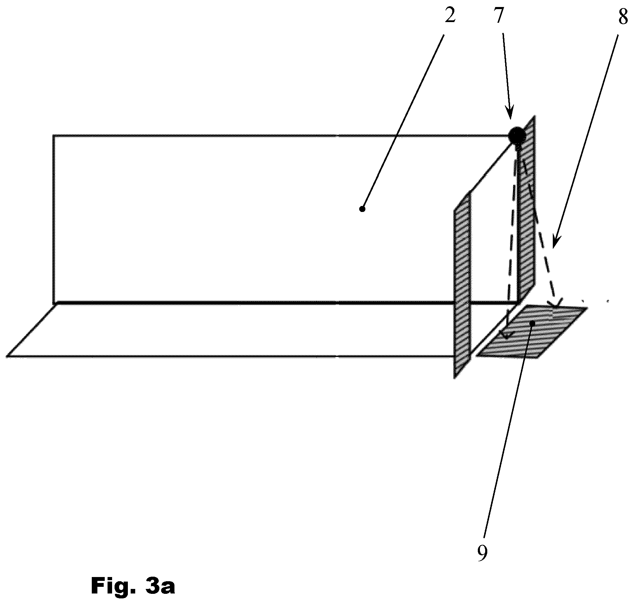

Fig. 3 zeigt ein Ergebnis der Anwendung des erfindungsgemäßen Verfahrens in einem anderen Fall. Zunächst werden auch hier durch den Sensor 7 im Bereich von Messpunkten oder Messpunktmengen, welche die erwarteten Abstände einer den Laderaum 1 begrenzenden dreidimensionalen Türoberfläche darstellen, aktuelle Abstände von Messpunkten als Messwerte und somit als 3D-Daten erfasst.

Der dem erfindungsgemäßen Verfahren zugrunde liegende Algorithmus hat mit den vorliegenden 3D-Daten nun den Fall identifiziert, dass die erfassten 3D-Daten eine dreidimensionale Oberflächen 9 außerhalb des Laderaums 1 beschreiben. Die gepunktete Linie in der Monitor-Darstellung der Fig. 2 stellt dabei etwa eine hintere Kante des Laderaumbodens 3 des Laderaums 1 dar. Zur deutlicheren Darstellung ist hier außerdem im Vergleich zu Fig. 2 die perspektivische Darstellung ein wenig gegen den Uhrzeigersinn gedreht.

Danach wird verfahrensgemäß einerseits auf den Zustand "Tür geöffnet" erkannt, andererseits wird auch festgestellt, dass die außerhalb des Laderaums 1 erfasste dreidimensionale Oberfläche 9 auf gleicher Höhe wie der Laderaumboden 3 liegt. Demzufolge wird nach der Logik des erfindungsgemäßen Verfahrens auf den Zustand "Tür geöffnet" und "Fahrzeug mit Laderaum an Laderampe" erkannt.

Auch hier, wie auch in den übrigen Monitorbildern, sind aufgrund der hier vorliegenden Geometrie, Sensoranordnung und der gewählten Aufarbeitung der 3D-Daten zu einem Videosignal die 3D-Daten der Türen 5, 6 als solche nicht dargestellt, ebenso wenig wie der Sensor 7.

Fig. 3a zeigt noch einmal skizzenhaft und rein qualitativ das Prinzip der Entstehung des Monitorbildes gemäß Fig. 3. Ähnlich der oben bereits dargestellten Skizze (Fig.1) ist hier eine dreidimensionale Oberflächen 9 außerhalb des Laderaums 1 erkennbar, die aus der Anwendung des dem erfindungsgemäßen Verfahren zugrunde liegenden Algorithmus zur Verarbeitung der erfassten 3D-Daten des Sensors 7 entstanden ist.

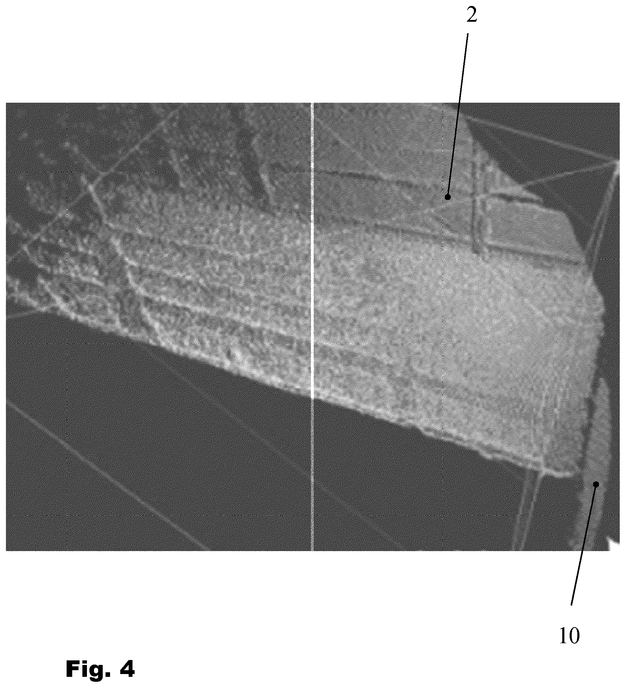

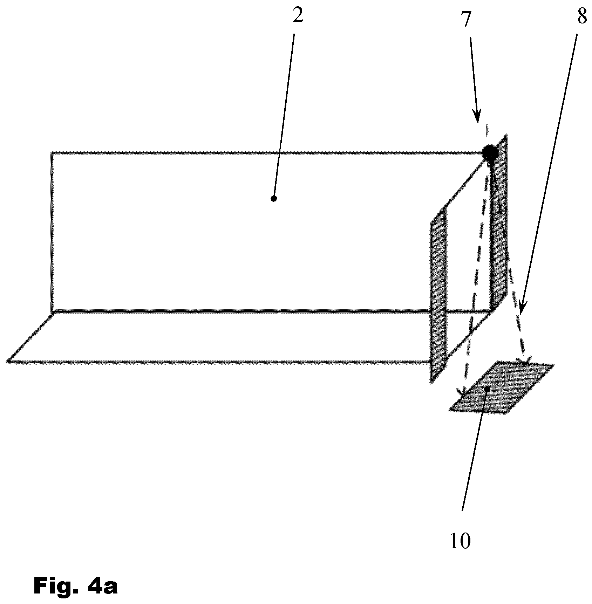

Etwas anders stellen sich die Verhältnisse in der Fig. 4 dar. Auch hier hat zunächst der dem erfindungsgemäßen Verfahren zugrunde liegende Algorithmus mit den vorliegenden und durch den Sensor 7 ermittelten 3D-Daten den Fall identifiziert, dass die erfassten 3D-Daten eine dreidimensionale Oberfläche 10 außerhalb des Laderaums 1 beschreiben.

Die außerhalb des Laderaums 1 erfasste dreidimensionale Oberfläche 10 liegt jedoch nicht auf gleicher Höhe wie der Laderaumboden 3. Demzufolge wird nach der Logik des erfindungsgemäßen Verfahrens auf den Zustand "Tür geöffnet" und "Fahrzeug mit Laderaum nicht an Laderampe" erkannt.

Fig. 4a zeigt zur Verdeutlichung skizzenhaft und rein qualitativ das Prinzip der Entstehung des Monitorbildes gemäß Fig. 4. Ähnlich der oben bereits dargestellten Skizze (Fig.3a) ist hier eine dreidimensionale Oberfläche 10 außerhalb des Laderaums 1 erkennbar, die unterhalb der Höhe des Laderaumbodens 3 liegt und aus der Anwendung des dem erfindungsgemäßen Verfahren zugrunde liegenden Algorithmus entstanden ist.

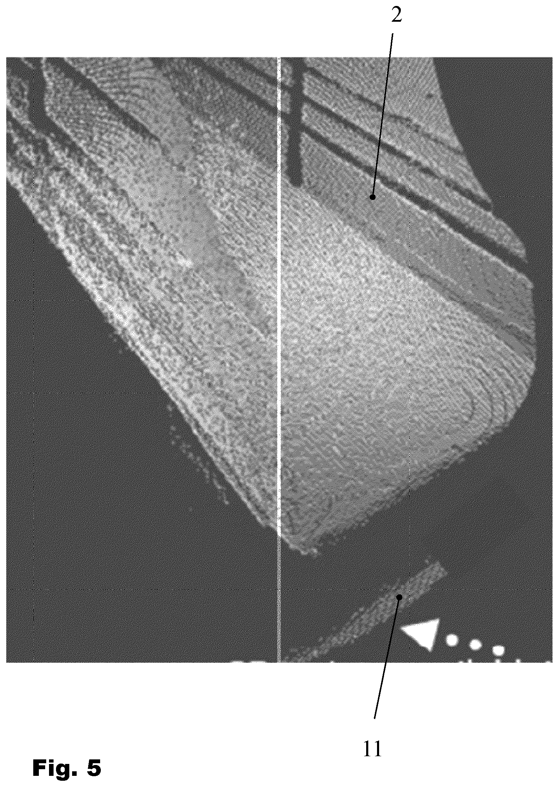

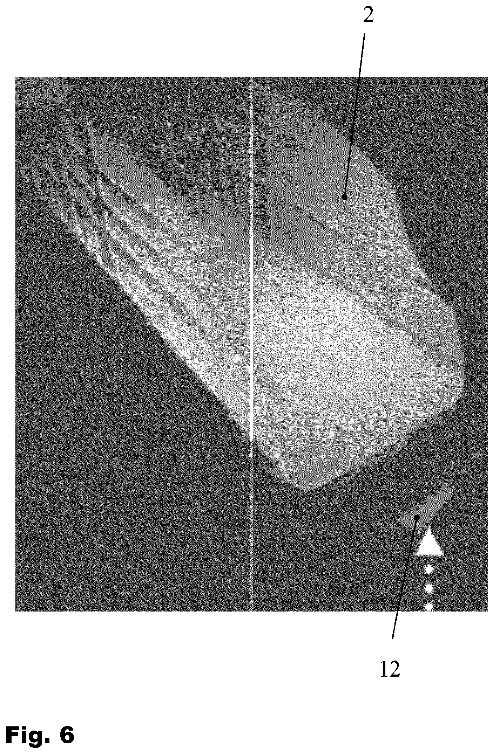

Fig. 5 und 6 stellen jeweils einen Fall dar, in dem der dem erfindungsgemäßen Verfahren zugrunde liegende Algorithmus mit den vorliegenden und durch den Sensor 7 ermittelten 3D-Daten auf "teilweise geöffnete Türen" und "Fahrzeug nicht an Laderampe" erkennt.

Auch hier erfasst der Sensor 7 in den erwarteten Abständen der Messpunkte einer den Laderaum 1 begrenzende dreidimensionalen Türoberfläche die aktuellen Abstände von Messpunkten von dem Sensor 7 als Messwerte. Jedoch stellen die dazu erfassten 3D-Daten hier nur in Teilbereichen der in Richtung der Türoberfläche erfassten Abstände Messpunkte oder Messpunktmengen dar, die dreidimensionale Oberflächen 11 bzw. 12 außerhalb des Laderaums 1 beschreiben. Damit wird in beiden Fällen auf den Zustand "Tür bereichsweise geöffnet" erkannt, nämlich entsprechend der Monitor-Darstellung gemäß Fig. 5 auf den Fall "linke Tür geöffnet" und in der Monitor-Darstellung gemäß Fig. 6 auf den Zustand "rechte Tür geöffnet". In beiden Fällen sind die erkannten dreidimensionalen Oberflächen unterhalb des Laderaumbodens zu verorten, sodass der Laderaum nicht an einer Laderampe stehen kann.

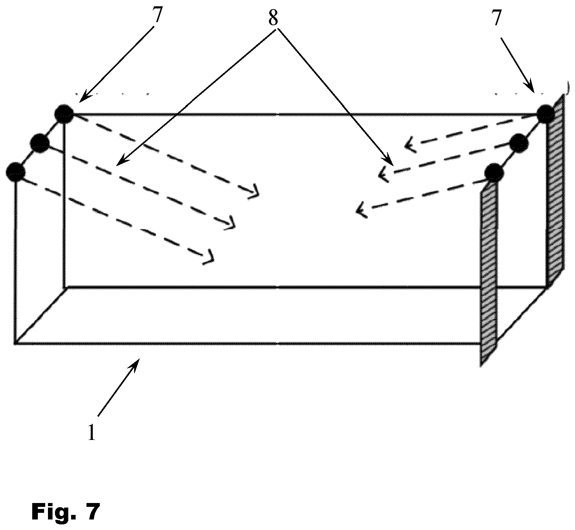

Fig. 7 zeigt noch einmal beispielhaft unterschiedliche Positionen von Sensoren 7 innerhalb eines nur skizzenhaft dargestellten Laderaums 1 mit ihren jeweiligen Haupt-Blickrichtungen.

### Bezugszeichenliste

### (Teil der Beschreibung)

- 1: Laderaum
- 2: rechte Begrenzungswand des Laderaums
- 3: Boden des Laderaums
- 4: Rückwand des Laderaums
- 5: Tür in der Rückwand des Laderaums
- 6: Tür in der Rückwand des Laderaums
- 7: TOF-Sensor
- 8: Blickrichtungen des Sensors/Messrichtungen
- 9: dreidimensionale Oberfläche außerhalb des Laderaums
- 10: dreidimensionale Oberfläche außerhalb des Laderaums
- 11: dreidimensionale Oberfläche außerhalb des Laderaums
- 12: dreidimensionale Oberfläche außerhalb des Laderaums

## Patentansprüche

1. Verfahren zur Überwachung eines Laderaums (1), bei dem mindestens eine den Laderaum begrenzende Fläche (4, 5, 6) mit einem oder mehreren im Inneren des Laderaumes vorgesehenen abstandsmessenden Sensoren (7) dreidimensional vermessen wird,
- wobei als Messwerte die aktuellen Abstände von Messpunkten oder Messpunktmengen von dem mindestens einen Sensor (7) erfasst werden und die zu den Messwerten gehörigen 3D-Daten mittels eines in einer Rechen- oder Auswerteeinheit programmierten Algorithmus verarbeitet und mit vorgegebenen Schwellenwerten oder Mustern für ein erwartetes Auftreten der Messwerte verglichen und klassifiziert werden,
- wobei bei einer vorgegebenen Abweichung zwischen aktuellen und erwarteten Messwerten ein weiter verarbeitbares Signal bereitgestellt wird,
- wobei der Sensor (7) im Bereich von Messpunkten oder Messpunktmengen, welche die erwarteten Abstände einer den Laderaum (1) begrenzenden dreidimensionalen Türoberfläche zum Sensor darstellen, aktuelle durch 3D-Daten beschriebene Abstände von Messpunkten als Messwerte erfasst und der Algorithmus so ausgebildet ist, dass
- in dem Fall, dass die erfassten und durch 3D-Daten beschriebenen Abstände Messpunkte oder Messpunktmengen darstellen, die dreidimensionale Oberflächen außerhalb des Laderaumes (1) beschreiben, auf den Zustand "Tür geöffnet" erkannt wird und ein entsprechendes weiter verarbeitbares erstes Signal bereitgestellt wird,
- in dem Fall, dass die erfassten Abstände Messpunkte oder Messpunktmengen darstellen, die keine dreidimensionale Oberflächen außerhalb des Laderaumes (1) beschreiben, auf den Zustand "Tür geschlossen" erkannt wird und ein entsprechendes weiter verarbeitbares zweites Signal bereitgestellt wird, und
in dem Fall, dass die erfassten Abstände Messpunkte oder Messpunktmengen darstellen, die dreidimensionale Oberflächen außerhalb des Laderaumes (1) beschreiben, die sich auf im Wesentlichen gleicher Höhe mit einem Laderaumboden (3) befinden, auf den Zustand "Tür geöffnet" und "Fahrzeug mit Laderaum an Laderampe" erkannt wird und ein entsprechendes weiter verarbeitbares viertes Signal bereitgestellt wird.

2. Verfahren nach Anspruch 1, bei dem der Algorithmus so ausgebildet ist, dass
- in dem Fall, dass die erfassten Abstände Messpunkte oder Messpunktmengen darstellen, die dreidimensionale Oberflächen außerhalb des Laderaumes (1) beschreiben, dann auf den Zustand "Tür geöffnet" erkannt wird, wenn Messpunkte oder Messpunktmengen, welche die erwarteten Abstände einer den Laderaum (1) begrenzende dreidimensionalen Türoberfläche zum Sensor darstellen, nicht ermittelbar sind und
- in dem Fall, dass die erfassten Abstände Messpunkte oder Messpunktmengen darstellen, die keine dreidimensionale Oberflächen außerhalb des Laderaumes (1) beschreiben, dann auf den Zustand "Tür geschlossen" erkannt wird, wenn Messpunkte oder eine Messpunktmenge, welche die erwarteten Abstände einer den Laderaum (1) begrenzenden dreidimensionalen Türoberfläche zum Sensor darstellen, mindestens teilweise ermittelbar sind.

3. Verfahren nach Anspruch 1 oder 2, bei dem der Algorithmus so ausgebildet ist, dass Messpunkte oder einer Messpunktmengen, welche die erwarteten Abstände einer den Laderaum (1) begrenzenden dreidimensionalen Türoberfläche zum Sensor darstellen, in Relation zueinander bewertet werden, wobei bei einem vorbestimmten Versatz und Abstand der Messpunkte zueinander und zum erwarteten Abstand auf eine winklige Stellung der begrenzenden dreidimensionalen Türoberfläche erkannt wird und ein Öffnungswinkel der Tür (5, 6) als weiter verarbeitbares drittes Signal bereitgestellt wird.

4. Verfahren nach einem der Ansprüche 1 bis 3, bei dem in dem Fall, dass die erfassten Abstände Messpunkte oder Messpunktmengen darstellen, die dreidimensionale Oberflächen außerhalb des Laderaumes (1) beschreiben, die sich im Wesentlichen unterhalb der Höhe des oder eines Laderaumbodens (3) befinden, auf den Zustand "Tür geöffnet" und "Fahrzeug mit Laderaum nicht an Laderampe" erkannt wird und ein entsprechendes weiter verarbeitbares fünftes Signal bereitgestellt wird.

5. Verfahren nach einem der Ansprüche 1 bis 4, wobei der Sensor (7) in den erwarteten Abständen einer den Laderaum (1) begrenzenden dreidimensionalen Türoberfläche die aktuellen Abstände von Messpunkten als Messwerte erfasst und in dem Fall, dass die erfassten Abstände Messpunkte oder Messpunktmengen darstellen, die nur in Teilbereichen der erwarteten Abstände dreidimensionale Oberflächen außerhalb des Laderaumes (1) beschreiben, auf den Zustand "Tür bereichsweise geöffnet" erkannt wird und ein entsprechendes weiter verarbeitbares sechstes Signal bereitgestellt wird.

6. Verfahren nach einem der Ansprüche 1 bis 5, bei dem der Sensor (7) als optischer Tiefen-Sensor ausgebildet ist, vorzugsweise als Time-of-Flight-Kamera oder Stereokamera.

7. Verfahren nach einem der Ansprüche 1 bis 5, bei dem der Sensor als LiDAR-Sensor oder Laser-Scanner ausgebildet ist.

8. Verfahren nach einem der Ansprüche 1 bis 7, bei dem der zeitliche Änderungsverlauf der die Abstände von Messpunkten oder Messpunktmengen kennzeichnenden Messwerte ausgewertet wird.

9. Einrichtung zur Überwachung eines Laderaums (1) zur Durchführung des Verfahrens nach einem der Ansprüche 1 bis 8, wobei die Einrichtung mindestens einen abstandsmessenden Sensor (7) zur dreidimensionalen Vermessung mindestens einer einen Laderaum (1) begrenzende Fläche (4, 5, 6) sowie eine Rechen- oder Auswerteeinheit mit einem programmierten Algorithmus aufweist, mit dem die vom Sensor (7) erfassten Messwerte nach einem Verfahren gemäß einem der Ansprüche 1 bis 8 verarbeitet werden, wobei der Sensor (7) an einer den Laderaum (1) begrenzenden und eine Tür (5, 6) aufweisenden Laderaumwand (4) angeordnet ist.

10. Einrichtung zur Überwachung eines Laderaums (1) zur Durchführung des Verfahrens nach einem der Ansprüche 1 bis 8, wobei die Einrichtung mindestens einen abstandsmessenden Sensor (7) zur dreidimensionalen Vermessung mindestens einer einen Laderaum (1) begrenzende Fläche sowie eine Rechen- oder Auswerteeinheit mit einem programmierten Algorithmus aufweist, mit dem die vom Sensor erfassten Messwerte nach einem Verfahren gemäß einem der Ansprüche 1 bis 9 verarbeitet werden, wobei der Sensor (7) gegenüber einer den Laderaum (1) begrenzenden und eine Tür (5, 6) aufweisenden Laderaumwand (4) angeordnet ist.

11. Fahrzeug mit einem Laderaum (1), vorzugsweise Lastkraftwagen, Anhängefahrzeug oder Wagenzug, wobei das Fahrzeug mindestens einen im Inneren eines Laderaumes (1) vorgesehenen abstandsmessenden Sensor (7) zur dreidimensionalen Vermessung mindestens einer den Laderaum (1) begrenzende Fläche (4, 5, 6) aufweist, wobei das Fahrzeug weiterhin eine Rechen- oder Auswerteeinheit mit einem programmierten Algorithmus aufweist, mit dem die vom Sensor (7) erfassten Messwerte nach einem Verfahren gemäß einem der Ansprüche 1 bis 8 verarbeitet werden.

## Claims

1. Method for monitoring a loading space (1), in which method at least one surface (4, 5, 6) bounding the loading space is measured in three dimensions using one or more distance-measuring sensors (7) provided inside the loading space,
- wherein the current distances of measurement points or sets of measurement points are captured as measured values by the at least one sensor (7), and by means of an algorithm programmed in a computing or analysis unit, the 3D data associated with the measured values are processed and compared with preset threshold values or patterns for an expected occurrence of the measured values and classified,
- wherein a signal, which can be processed further, is provided when there is a preset deviation between current and expected measured values,
- wherein the sensor (7) captures, in the region of measurement points or sets of measurement points that represent the expected distances to the sensor from a three-dimensional door surface bounding the loading space (1), current distances of measurement points, which distances are described by 3D data, as measured values and the algorithm is designed such that
- in the case that the captured distances described by 3D data represent measurement points or sets of measurement points that describe three-dimensional surfaces outside the loading space (1), the "door open" state is recognized, and a corresponding first signal is provided, which can be processed further,
- in the case that the captured distances represent measurement points or sets of measurement points that do not describe three-dimensional surfaces outside the loading space (1), the "door closed" state is recognized, and a corresponding second signal is provided, which can be processed further, and in the case that the captured distances represent measurement points or sets of measurement points that describe three-dimensional surfaces outside the loading space (1) which are at substantially the same height as a loading-space floor (3), the "door open" and "vehicle with loading space at loading ramp" state is recognized, and a corresponding fourth signal is provided, which can be processed further.

2. Method according to Claim 1, in which the algorithm is designed such that
-- in the case that the captured distances represent measurement points or sets of measurement points that describe three-dimensional surfaces outside the loading space (1), the "door open" state is recognized if it is not possible to ascertain measurement points or sets of measurement points that represent the expected distances to the sensor from a three-dimensional door surface bounding the loading space (1), and
- in the case that the captured distances represent measurement points or sets of measurement points that do not describe three-dimensional surfaces outside the loading space (1), the "door closed" state is recognized if it is possible to ascertain at least some measurement points or some of a set of measurement points that represent the expected distances to the sensor from a three-dimensional door surface bounding the loading space (1).

3. Method according to Claim 1 or 2, in which the algorithm is designed such that measurement points or sets of measurement points that represent the expected distances to the sensor from a three-dimensional door surface bounding the loading space (1) are evaluated in relation to each other, wherein given a predetermined offset and distance of the measurement points with respect to each other and to the expected distance, an angled position of the bounding three-dimensional door surface is recognized, and an opening angle of the door (5, 6) is provided as a third signal, which can be processed further.

4. Method according to any of Claims 1 to 3, in which, in the case that the captured distances represent measurement points or sets of measurement points that describe three-dimensional surfaces outside the loading space (1) which are substantially below the height of the, or a, loading-space floor (3), the "door open" and "vehicle with loading space not at loading ramp" state is recognized, and a corresponding fifth signal is provided, which can be processed further.

5. Method according to any of Claims 1 to 4, wherein the sensor (7) captures in the expected distances of a three-dimensional door surface bounding the loading space (1) the current distances of measurement points as measured values, and in the case that the captured distances represent measurement points or sets of measurement points that describe only in portions of the expected distances three-dimensional surfaces outside the loading space (1), the "door open in parts" state is recognized, and a corresponding sixth signal is provided, which can be processed further.

6. Method according to any of Claims 1 to 5, in which the sensor (7) is in the form of an optical depth sensor, preferably a time-of-flight camera or stereo camera.

7. Method according to any of Claims 1 to 5, in which the sensor is in the form of a LiDAR sensor or laser scanner.

8. Method according to any of Claims 1 to 7, in which the change over time in the measured values characterizing the distances of measurement points or sets of measurement points is analysed.

9. Apparatus for monitoring a loading space (1) for implementing the method according to any of Claims 1 to 8, wherein the apparatus has at least one distance-measuring sensor (7) for three-dimensional measurement of at least one surface (4, 5, 6) bounding a loading space (1), and a computing or analysis unit having a programmed algorithm, which is used to process in accordance with a method according to any of Claims 1 to 8 the measured values captured by the sensor (7), wherein the sensor (7) is located on a loading-space wall (4) that bounds the loading space (1) and has a door (5, 6).

10. Apparatus for monitoring a loading space (1) for implementing the method according to any of Claims 1 to 8, wherein the apparatus has at least one distance-measuring sensor (7) for three-dimensional measurement of at least one surface bounding a loading space (1), and a computing or analysis unit having a programmed algorithm, which is used to process in accordance with a method according to any of Claims 1 to 9 the measured values captured by the sensor, wherein the sensor (7) is located opposite a loading-space wall (4) that bounds the loading space (1) and has a door (5, 6).

11. Vehicle having a loading space (1), preferably a truck, trailer vehicle or wagon train, wherein the vehicle has at least one distance-measuring sensor (7) provided inside a loading space (1) for three-dimensional measurement of at least one surface (4, 5, 6) bounding the loading space (1), wherein the vehicle also has a computing or analysis unit having a programmed algorithm, which is used to process in accordance with a method according to any of Claims 1 to 8 the measured values captured by the sensor (7).

## Revendications

1. Procédé de surveillance d'un espace de chargement (1), dans lequel au moins une face (4, 5, 6) délimitant l'espace de chargement est mesurée en trois dimensions à l'aide d'un ou de plusieurs capteurs (7) de mesure de distance prévus à l'intérieur de l'espace de chargement,
- les distances courantes de points de mesure ou de quantités de points de mesure étant détectées par l'au moins un capteur (7) en tant que valeurs de mesure et les données 3D relevant des valeurs de mesure étant traitées et étant comparées à des valeurs de seuil ou des motifs prédéfinis pour une occurrence attendue des valeurs de mesure et étant classifiées au moyen d'un algorithme programmé dans une unité de calcul ou d'évaluation,
- un signal pouvant être traité ultérieurement étant fourni en cas d'écart prédéfini entre des valeurs de mesure courantes et attendues,
- le capteur (7) dans la zone de points de mesure ou de grandeurs de points de mesure, qui représentent les distances attendues d'une surface de porte tridimensionnelle délimitant l'espace de chargement (1) par rapport au capteur, détectant des distances courantes de points de mesure décrites par des données 3D en tant que valeurs de mesure et l'algorithme étant formé de telle sorte que
- dans le cas où les distances détectées et décrites par des données 3D représentent des points de mesure ou des quantités de points de mesure qui décrivent des surfaces tridimensionnelles à l'extérieur de l'espace de chargement (1), l'état « porte ouverte » est identifié et un premier signal correspondant pouvant être traité ultérieurement est fourni,
- dans le cas où les distances détectées représentent des points de mesure ou des quantités de points de mesure qui ne décrivent pas des surfaces tridimensionnelles à l'extérieur de l'espace de chargement (1), l'état de « porte fermée » est identifié et un deuxième signal correspondant pouvant être traité ultérieurement est fourni, et dans le cas où les distances détectées représentent des points de mesure ou des grandeurs de points de mesure qui décrivent des surfaces tridimensionnelles à l'extérieur de l'espace de chargement (1), lesquelles se trouvent sensiblement à la même hauteur que le plancher (3) d'espace de chargement, l'état « porte ouverte » et « véhicule avec espace de chargement sur rampe de chargement » est identifié et un quatrième signal correspondant pouvant être traité ultérieurement est fourni.

2. Procédé selon la revendication 1, dans lequel l'algorithme est formé de telle sorte que
- dans le cas où les distances détectées représentent des points de mesure ou des grandeurs de points de mesure qui décrivent des surfaces tridimensionnelles à l'extérieur de l'espace de chargement (1), l'état « porte ouverte » est identifié lorsque des points de mesure ou des grandeurs de points de mesure, qui représentent les distances attendues d'une surface de porte tridimensionnelle délimitant l'espace de chargement (1) par rapport au capteur, ne peuvent pas être déterminés, et
- dans le cas où les distances détectées représentent des points de mesure ou des quantités de points de mesure qui ne décrivent pas des surfaces tridimensionnelles à l'extérieur de l'espace de chargement (1), l'état « porte fermée » est identifié lorsque des points de mesure ou une quantité de points de mesure, qui représentent les distances attendues d'une surface de porte tridimensionnelle délimitant l'espace de chargement (1) par rapport au capteur, peuvent être déterminés au moins en partie.

3. Procédé selon la revendication 1 ou 2, l'algorithme étant formé de telle sorte que des points de mesure ou des quantités de points de mesure, qui représentent les distances attendues d'une surface de porte tridimensionnelle délimitant l'espace de chargement (1) par rapport au capteur, sont évalués les uns par rapport aux autres, une position angulaire de la surface de porte tridimensionnelle de délimitation étant identifiée et un angle d'ouverture de la porte (5, 6) étant fourni en tant que troisième signal pouvant être traité ultérieurement dans le cas d'un décalage prédéfini et d'une distance des points de mesure les uns par rapport aux autres et par rapport à la distance attendue.

4. Procédé selon l'une des revendications 1 à 3, dans le cas où les distances détectées représentent des points de mesure ou des quantités de points de mesure, qui décrivent des surfaces tridimensionnelles à l'extérieur de l'espace de chargement (1) qui se trouvent sensiblement sous la hauteur du ou d'un plancher (3) d'espace de chargement, l'état « porte ouverte » et « véhicule avec espace de chargement hors rampe de chargement » étant identifié et un cinquième signal correspondant pouvant être traité ultérieurement étant fourni.

5. Procédé selon l'une des revendications 1 à 4, le capteur (7) détectant, aux distances attendues d'une surface de porte tridimensionnelle délimitant l'espace de chargement (1), les distances courantes de points de mesure en tant que valeurs de mesure et, dans le cas où les distances détectées représentent des points de mesure ou des quantités de points de mesure, qui ne décrivent que des surfaces tridimensionnelles à l'extérieur de l'espace de chargement (1) dans des zones partielles des distances attendues, l'état « porte ouverte par zone » étant identifié et un sixième signal correspondant pouvant être traité ultérieurement étant fourni.

6. Procédé selon l'une des revendications 1 à 5, le capteur (7) étant formé comme un capteur optique de profondeur, de préférence comme une caméra à temps de vol ou une caméra stéréo.

7. Procédé selon l'une des revendications 1 à 5, le capteur étant formé comme un capteur LiDAR ou un scanner laser.

8. Procédé selon l'une des revendications 1 à 7, l'évolution dans le temps des valeurs de mesure caractérisant les distances de points de mesure ou de quantités de points de mesure étant évaluée.

9. Dispositif de surveillance d'un espace de chargement (1) pour la mise en œuvre du procédé selon l'une des revendications 1 à 8, le dispositif comportant au moins un capteur (7) de mesure de distance pour la mesure tridimensionnelle d'au moins une face (4, 5, 6) délimitant un espace de chargement (1) ainsi qu'une unité de calcul ou d'évaluation avec un algorithme programmé, avec lequel les valeurs de mesure détectées par le capteur (7) sont traitées selon un procédé selon l'une des revendications 1 à 8, le capteur (7) étant disposé sur une paroi (4) d'espace de chargement délimitant l'espace de chargement (1) et comportant une porte (5, 6) .

10. Dispositif de surveillance d'un espace de chargement (1) pour la mise en œuvre du procédé selon l'une des revendications 1 à 8, le dispositif comportant au moins un capteur (7) de mesure de distance pour la mesure tridimensionnelle d'au moins une surface délimitant l'espace de chargement (1) ainsi qu'une unité de calcul ou d'évaluation avec un algorithme programmé, avec lequel les valeurs de mesure détectées par le capteur sont traitées selon un procédé selon l'une des revendications 1 à 9, le capteur (7) étant disposé en vis-à-vis d'une paroi (4) d'espace de chargement délimitant l'espace de chargement (1) et comportant une porte (5, 6).

11. Véhicule avec un espace de chargement (1), de préférence camion, véhicule tracté ou rame de véhicules, le véhicule comportant au moins un capteur (7) de mesure de distance prévu à l'intérieur d'un espace de chargement (1) pour mesurer en trois dimensions au moins une face (4, 5, 6) délimitant l'espace de chargement (1), le véhicule comportant par ailleurs une unité de calcul ou d'évaluation avec un algorithme programmé, avec lequel les valeurs de mesure détectées par le capteur (7) sont traitées selon un procédé selon l'une des revendications 1 à 8.
